# EUROPÄISCHE PATENTSCHRIFT

(11) **EP 1 093 419 B1**
(45) Veröffentlichungstag und Bekanntmachung des Hinweises auf die Patenterteilung: **27.07.2005**
(21) Anmeldenummer: 99962079.2
(22) Anmeldetag: 23.11.1999
(51) Int. Cl.: B60D 1/60

(54) **SCHUTZABDECKUNG FÜR ANHÄNGERKUPPLUNGEN**
PROTECTIVE COVERING FOR TRAILER COUPLINGS
CAPOT DE PROTECTION DESTINE A DES DISPOSITIFS D'ATTELAGE DE REMORQUES

(30) Priorität: 24.11.1998 DE 29821005 U
(43) Veröffentlichungstag der Anmeldung: 25.04.2001
(73) Patentinhaber: Busse, Frank Rüdiger, 57074 Siegen (DE)
(72) Erfinder: Busse, Frank Rüdiger, 57074 Siegen (DE)
(86) Internationale Anmeldenummer: PCT/DE1999/003757
(87) Internationale Veröffentlichungsnummer: WO 2000/030878

(56) Entgegenhaltungen:
- WO-A-98/38054
- FR-A- 1 512 300
- FR-A- 2 097 306
- US-A- 3 187 710
- US-A- 5 533 743

## Beschreibung

Die Erfindung betrifft eine Abdeckung für eine Anhängerkupplung an einem Kraftfahrzeug gemäß Anspruch 1. Diese Abdeckung ist derart ausgestaltet, daß sie die am Heck des Fahrzeuges herausragende Kupplungskugel und Kupplungsstange in die Fahrzeugkontur integriert, und so vor unbeabsichtigtem Körperkontakt sowohl mit der Kupplungskugel als auch mit der Kupplungsstange schützt.

Herkömmliche Anhängerkupplungen an PKW werden in abnehmbarer oder in feststehender Ausführung angeboten. Während erstere in der Anschaffung relativ teuer sind (etwa das Doppelte der feststehenden Ausführung) besteht bei zweiteren der Nachteil, daß sie ein aus den Fahrzeugumrissen herausstehendes Bauteil bilden. Dieser Nachteil macht sich beim stehenden Fahrzeug besonders dann bemerkbar, wenn sich dieses in einer Parkreihe befindet. Der Durchgang zwischen dem Heck des mit einer Anhängerkupplung ausgerüsteten PKW und dem dahinter befindlichen Fahrzeug wird durch die Kupplung eingeengt. Passierende Fußgänger geraten hierbei leicht in Kontakt mit der herausragenden Kupplung, die aufgrund ihrer unauffälligen Farbgebung und Gestalt speziell bei Dunkelheit nicht gut zu erkennen ist. Ein Körperkontakt ist in der Regel schmerzhaft und kann außerdem zu Verletzungen führen. Diese Gefahr besteht auch in erhöhtem Maße für Kinder, die in der Nähe von parkenden Autos spielen.
Nicht abnehmbare Anhängerkupplungen werden häufig mit einer Schutzkappe versehen, die jedoch in erster Linie die Funktion zu erfüllen hat, die Kupplungskugel vor Korrosion zu schützen.
Verbesserte Ausführungen mit gepolstertem Ring bieten einen gewissen Schutz vor Kontakt mit der Kugel, jedoch nicht vor Kontakt mit der Kupplungsstange. Außerdem bieten diese Ausführungen nur eine unzureichende Dämpfung bei eventueller Berührung.

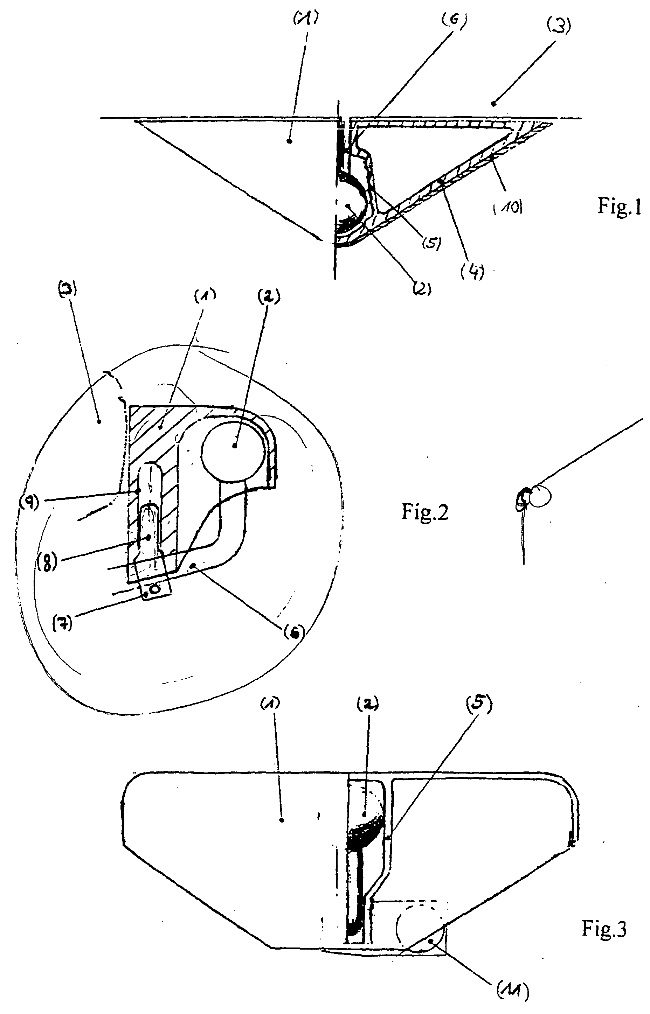

Die hier beschriebene Konstruktion schützt dadurch vor Verletzungen, daß sowohl die Kugel, als auch der Zwischenraum zwischen Kugel und Wagenheck, ganz oder teilweise mit abgedeckt wird. Hierdurch wird erreicht, daß ein passierender Fußgänger bei versehentlicher Berührung nicht in direkten Körperkontakt mit der starren Kupplungsstange bzw. Kupplungskugel kommt, sondern nur gegen die Flanken der Abdeckung stößt. Die Flanken der Abdeckung, die von der Kupplungskugel in Richtung Wagenheck verlaufen, können hierbei so angeordnet sein, daß ihre Konturen eine Komponente quer zur Fahrtrichtung besitzt, d.h. daß sie schräg verlaufen (Fig. 1). Durch eine schräge Anordnung dieser Flanken erfolgt ein eventueller Körperkontakt mit den Flanken der Abdeckung nur unter entsprechend stumpfem Winkel, wodurch die Verletzungsgefahr minimiert wird. Eine mögliche doppelwandige, bzw. nachgiebige oder gepolsterte Ausführung der Flanken würde bewirken, daß Berührungen noch weicher abgefangen würden.

Ein Ausführungsbeispiel der Erfindung wird im folgenden unter Bezugnahme auf die Zeichnungen beschrieben,
in allen vier Abbildungen ist jeweils eine auf die Anhängerkupplung aufgesetzte Abdeckung mit schräg verlaufenden Flanken dargestellt.

**Fig. 1** zeigt eine Draufsicht auf das Heck eines Personenkraftwagens; teilweise geschnitten.

**Fig. 2** zeigt eine Seitenansicht auf den Heckbereich eines Personenwagens.

**Fig. 3** zeigt eine Teilansicht eines Personenkraftwagens von hinten; teilweise geschnitten.

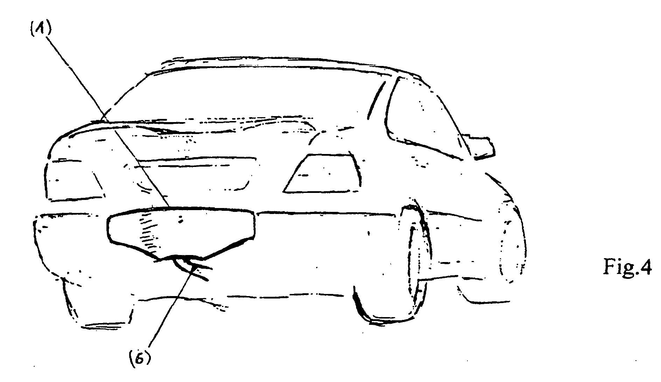

**Fig. 4** zeigt eine räumliche Ansicht eines PKW-Hecks

Die Abdeckung (1) wird über die Kupplungskugel (2) von oben darübergestülpt. In dieser Lage wird sie durch zwei innere, nachgiebige Wandungen (5) gehalten, die die Kupplungskugel (2) und die Kupplungsstange (6) beidseitig umfassen und hierbei leicht auseinandergebogen werden. Gegebenenfalls sorgt eine Riffelung der Wangen für den nötigen Halt. Die Wangen verhindern gleichzeitig ein Kippeln der Abdeckung.
Die zum Wagenheck zeigende Seite der Abdeckung kann so ausgeführt sein, daß sie am Wagenheck, d. h. am Stoßfänger (3) ganz oder fast anliegt. Hierdurch wird ein Verdrehen der Abdeckung vermieden. Da der Abstand zwischen Kupplungskugel (2) und Stoßfänger (3) je nach Fahrzeug variieren kann, wird der Teil der Abdeckung, der die Kupplungskugel überdeckt, in Form eines Langloches ausgeführt. Die Wandungen (5) des Langloches können gewellt ausgeführt sein, so daß die Kupplungskugel in verschiedenen Längspositionen hierin einrasten kann. Hierdurch können gewisse Abstandsdifferenzen zwischen Kupplungskugel und Stoßfänger ausgeglichen werden. Für größere Abstandsdifferenzen ist die Herstellung verschiedener Ausführungen sinnvoll. Zusätzlich ist es möglich, die Wandungen nicht parallel, sondern mit geringer werdendem Abstand in Richtung auf das Wagenheck auszuführen, so das die Abdeckung im montierten Zustand leicht gegen den Stoßfänger gedrückt wird.

Als Material für die Abdeckung ist Kunststoff geeignet, wie er auch für die Herstellung von Stoßfängern und anderen Anbauteilen am KFZ Verwendung findet. Weiterhin kann die Abdeckung aus einer Kombination von Kunststoff- und Metall-Bauteilen gefertigt werden.

## Patentansprüche

1. Schutzvorrichtung für Anhängerkupplungen an einem Heck eines Kraftfahrzeuges mit einem Dorn (8) und, mit einer Abdeckung mit einer Kontur (4), die einen zwischen der Kupplungskugel (2) und dem Heck (3) des KFZ aufgespannten Raum abdeckt, **dadurch gekennzeichnet, dass** an der Kupplungsstange (6) der senkrecht nach oben weisende Dorn (8) montiert wird, der in eine Aufnahme (9) an der Abdeckung eingreift, um diese in ihrer Lage zu fixieren.

2. Schutzvorrichtung für Anhängerkupplungen nach Anspruch 1, **dadurch gekennzeichnet, dass** die Abdeckung (1) aus einem oder mehreren fest montierten Teilen besteht und aus einem oder mehreren beweglichen Teilen, die zum Ankoppeln des Anhängers aufgeklappt werden, derart, dass der oder die aufgeklappten Teile der Abdeckung im aufgeklappten Zustand sich zwischen Kupplungskugel und Wagenheck befindet, und hierdurch das Wagenheck vor Beschädigungen durch die Deichsel des Anhängers beim Ankoppeln schützt.

3. Schutzvorrichtung für Anhängerkupplungen nach einem der vorhergehenden Ansprüche, **dadurch gekennzeichnet, dass** die Kontur (4) der Abdeckung (1) nachgiebig ausgeführt ist.

4. Schutzvorrichtung für Anhängerkupplungen nach einem der vorhergehenden Ansprüche, **dadurch gekennzeichnet, dass** auf der Kontur (4) eine stossabsorbierende Schicht aus einem elastischen Material (10) aufgebracht ist.

5. Schutzvorrichtung für Anhängerkupplungen nach einem der vorhergehenden Ansprüche, **dadurch gekennzeichnet, dass** die Begrenzungskonturen (4) der Abdeckung von Richtung der Kupplungskugel (2) in Richtung Wagenheck (3) in der Draufsicht eine Komponente quer zur Fahrtrichtung besitzen.

6. Schutzvorrichtung für Anhängerkupplungen nach einem der vorhergehenden Ansprüche, **dadurch gekennzeichnet, dass** an der Kupplungsstange (6) montierte Bauteile bzw. Zusatzeinrichtungen oder Vorrichtungen/Halterungen für die Montage von Bauteilen zur Verminderung der Schlingerneigung von Anhängern, durch die Abdeckung (1) mit überdeckt sind.

7. Schutzvorrichtung für Anhängerkupplungen nach einem der vorhergehenden Ansprüche, **dadurch gekennzeichnet, dass** als ein zusätzliches Bauteil ein Abstandswarner integriert ist.

8. Schutzvorrichtung für Anhängerkupplungen nach einem der vorhergehenden Ansprüche, **dadurch gekennzeichnet, dass** zusätzliche Leuchten integriert sind.

## Claims

1. Safety device for trailer couplings at the rear end of a motor vehicle, with a mandrel (8) and with a cover with an outline (4), which covers an area stretched between the hook ball (2) and the rear end of the motor vehicle (3), **characterized in that** at the coupling rod (6) the vertical mandrel (8) is installed, which is able to be linked to a device (9) at the cover, in order to fix these in their position.

2. Safety device for trailer couplings according to claim 1, **characterized in that** the cover (1) consists of one or more firmly installed parts and of one or more moving parts, which are opened unfold for coupling the trailer in such a manner that the one or the opened parts of the cover are in the opened state between the hook ball and the rear end of the vehicle, and thereby protects the rear end of the vehicle against damages by the pole of the trailer when coupling.

3. Safety device for trailer couplings according to any one of the preceeding claims, **characterized in that** the outline (4) of the cover (1) is flexibly implemented.

4. Safety device for trailer couplings according to any one of the preceeding claims, **characterized in that** on the outline (4) an impact-absorbing layer made of a flexible material (10) is applied.

5. Safety device for trailer couplings according to any one of the preceeding claims, **characterized in that** the delimitation outlines (4) of the cover from the direction of the hook ball (2) toward the rear end of the vehicle (3) possess a component in the plan view transverse to the driving direction.

6. Safety device for trailer couplings according to any one of the preceeding claims, **characterized in that** construction units and/or additional devices for the assembly for anti-roll units for trailers installed at the coupling rod (6), are also covered by the cover (1).

7. Safety device for trailer couplings according to any one of the preceeding claims, **characterized in that** as an additional construction unit a proximity sensor is integrated.

8. Safety device for trailer couplings according to any one of the preceeding claims, **characterized in that** additional lights are integrated.

## Revendications

1. Protecteur adaptable aux systèmes d'attelage pour remorques du genre de ceux a rotule a l'arriere d'une automobile, avec une chevilette (8) et un recouvrement avec un contour (4), qui couvrent l'espace étiré entre la rotule (2) et l'arriere de l'automobile (3), **caractérisé en ce que** sur la barre d'attelage, la chevilette verticalement (8) engrend dans un dispositif (9) au recouvrement, pour fixer le recouvrement dans sa orientation.

2. Le recouvrement (1) se compose d'une ou plusieurs parties installées solidement et d'une ou plusieurs parties mobiles qui sont décapoté pour accoupler la remorque, de telle manière, que celui ou les parties ouvertes du recouvrement dans la position ouvert se trouve entre la rotule et l'arriere de l'automobile, pour protèger l'arriere de l'automobile contre des dégâts par le limon de la remorque en couplant.

3. Le Contour (4) du recouvrement (1) sont confectionner flexible.

4. Sur le Contour (4) est etalé une couche para-choc d'une materiel flexible (10).

5. Le Contour de limitation (4) du recouvrement de la direction de la rotule (2) en direction d'arriere de l'automobile (3) en perspective d'en haut possèdent une composante en travers au sens de la marche.

6. A la barre d'attelage (6) éléments installés et/ou dispositifs speciaux ou dispositifs/appuis pour l'assemblage des éléments antiroulis des remorques, sont par lesquelles couverture (1) est couverts.

7. Du fait que comme un élément supplémentaire, un dispositif d'alarme pour tenir de distancer est intégré.

8. Du fait que des lumières supplémentaires sont intégrées.
